# EUROPEAN PATENT SPECIFICATION

(11) **EP 4 350 827 B1**
(45) Date of publication and mention of the grant of the patent: **11.06.2025**
(21) Application number: 23784950.0
(22) Date of filing: 04.04.2023
(51) Int. Cl.: H01M 10/04, H01M 10/0585, H01M 10/0583, B65H 45/101

(54) **METHOD FOR MANUFACTURING ELECTRODE ASSEMBLY, AND APPARATUS FOR MANUFACTURING ELECTRODE ASSEMBLY**
VERFAHREN ZUR HERSTELLUNG EINER ELEKTRODENANORDNUNG UND VORRICHTUNG ZUR HERSTELLUNG EINER ELEKTRODENANORDNUNG
PROCÉDÉ DE FABRICATION D'UN ENSEMBLE ÉLECTRODE ET APPAREIL DE FABRICATION D'UN ENSEMBLE ÉLECTRODE

(30) Priority: 04.04.2022 KR 20220041550
(43) Date of publication of application: 10.04.2024
(73) Proprietor: LG Energy Solution, Ltd., Seoul 07335 (KR)
(72) Inventor: SUL, Donghee, Daejeon 34122 (KR); SUNG, Kieun, Daejeon 34122 (KR); MIN, Kihong, Daejeon 34122 (KR)
(74) Representative: Plasseraud IP
(86) International application number: PCT/KR2023/004489
(87) International publication number: WO 2023/195725

(56) References cited:
- JP-A- 2021 022 530
- KR-A- 20110 037 222
- KR-A- 20200 017 824
- KR-A- 20200 023 853
- KR-A- 20200 023 854
- KR-A- 20200 092 760

## Description

### [Technical Field]

This application claims priority to and the benefit of Korean Patent Application No. 10-2022-0041550 filed with the Korean Intellectual Property Office on April 4, 2022.

The present invention relates to a method and apparatus for manufacturing an electrode assembly.

### [Background Art]

Unlike primary batteries, secondary batteries may be rechargeable and have small scales and high capacities. Recently, research and development have been actively conducted on the secondary batteries. As development of technologies and demands for mobile devices are increased, there is a rapidly increasing demand for rechargeable batteries as energy sources.

The secondary batteries are classified into coin batteries, cylindrical batteries, angular batteries, and pouch-type batteries depending on shapes of battery casings. In the secondary battery, an electrode assembly mounted in the battery casing is a power generation element that has a structure made by stacking electrodes and separators and may be charged and discharged.

The electrode assemblies may be approximately classified into a Jelly-roll-type electrode assembly made by winding sheet-shaped positive and negative electrodes coated with active materials with a separator interposed therebetween, a stack-type electrode assembly made by sequentially stacking a plurality of positive and negative electrodes in a state in which separators are interposed between the plurality of positive and negative electrodes, and a stack-and-folding-type electrode assembly made by winding stack-type unit cells by using long separation films.

In this case, a stacked and folded type electrode assembly is manufactured by fixing a stack, in which separators are folded in a zigzag manner and electrodes are positioned between the separators, by using a gripper and then heating and pressing the stack, as disclosed in patent application KR 2020 0023854 A.

There is a problem in that the separator is creased because pressure is not applied to a portion corresponding to the gripper during the process of fixing the stack, in which the plurality of positive electrodes and the plurality of negative electrodes are sequentially stacked with the separators interposed therebetween, by using the gripper and then heating and pressing the stack.

### <Document of Related Art>

Korean Patent Application Laid-Open No. 10-2013-0132230

### [Detailed Description of the Invention]

### [Technical Problem]

An object of the present invention is to provide a method and apparatus for manufacturing an electrode assembly.

### [Technical Solution]

The present invention provides a method of manufacturing an electrode assembly as recited in claim 1, method including: manufacturing a stack by stacking first electrodes, separators, and second electrodes on a stack table so that the first electrodes and the second electrodes are alternately disposed between the folded separators; fixing the stack on the stack table by gripping a first area of the stack by means of a first gripper; heating and pressing only a second area of the stack fixed by the first gripper; releasing the first area of the stack by releasing the first gripper after the heating and pressing of the second area of the stack are completed; fixing the stack to the stack table by gripping the second area of the stack by means of a second gripper; and heating and pressing only the first area of the stack fixed by the second gripper, in which the first and second areas partially overlap each other or are different from each other.

In addition, the present invention provides an apparatus for manufacturing an electrode assembly as recited in claim 6, which manufactures the electrode assembly by stacking a first electrode, a separator, and a second electrode, the apparatus including: a stack table on which the first electrode, the separator, and the second electrode are stacked in the form of a stack in which the first and second electrodes are alternately disposed between the folded separators; a first gripper configured to grip a first area of the stack and fix the stack to the stack table; a second gripper configured to grip a second area of the stack and fix the stack to the stack table; and a press part positioned between the first gripper and the second gripper and configured to bond the first electrode, the separator, and the second electrode by heating and pressing only the first or second area of the stack, in which the first and second areas partially overlap each other or are different from each other.

### [Advantageous Effects]

The method and apparatus for manufacturing an electrode assembly according to the embodiment of the present application may reduce a problem in which the separator is creased or the position of the electrode is distorted during the process of manufacturing the electrode assembly by stacking the electrodes and the separator.

The method and apparatus for manufacturing an electrode assembly according to the embodiment of the present application may manufacture the electrode assembly with uniform performance and align and fix the electrode and the separator so that the position of the electrode is not distorted. Therefore, it is possible to improve energy density and prevent the electrode of the electrode assembly from protruding to the external appearance of the battery.

### [Brief Description of Drawings]

FIG. 1 is a top plan view exemplarily illustrating an electrode assembly manufacturing apparatus according to an embodiment of the present invention.
FIG. 2 is a front view illustrating a concept of the electrode assembly manufacturing apparatus according to the embodiment of the present invention.
FIG. 3 is a cross-sectional view exemplarily illustrating an electrode assembly manufactured by the electrode assembly manufacturing apparatus according to the embodiment of the present invention.
FIG. 4 is a perspective view illustrating a press part of the electrode assembly manufacturing apparatus according to the embodiment of the present invention.
FIG. 5 is a perspective view exemplarily illustrating a state in which a press part presses a stack in an electrode assembly manufacturing apparatus in the related art.
FIG. 6 is a perspective view illustrating a stack table of the electrode assembly manufacturing apparatus according to the embodiment of the present invention.
FIG. 7 is a perspective view illustrating a separator supply part of the electrode assembly manufacturing apparatus according to the embodiment of the present invention.
FIG. 8 is a perspective view illustrating a first electrode seating table of the electrode assembly manufacturing apparatus according to the embodiment of the present invention.
FIG. 9 is a perspective view illustrating a second electrode seating table of the electrode assembly manufacturing apparatus according to the embodiment of the present invention.
FIG. 10 is a perspective view illustrating a first suction head of the electrode assembly manufacturing apparatus according to the embodiment of the present invention.
FIG. 11 is a bottom plan view illustrating the first suction head of the electrode assembly manufacturing apparatus according to the embodiment of the present invention.
FIG. 12 is a top plan view illustrating a gripper and the stack table of the electrode assembly manufacturing apparatus according to the embodiment of the present invention.
FIG. 13 is a front view illustrating a concept of an electrode assembly manufacturing apparatus according to another embodiment of the present invention.

### [Explanation of Reference Numerals and Symbols]

10: Electrode assembly
11: First electrode
11a: First electrode tab
12: Second electrode
12a: Second electrode tab
14: Separator
100, 200: Electrode assembly manufacturing apparatus
110: Stack table
111: Table body
112: Stack table heater
120: Separator supply part
121: Separator heating part
121a: Body
121b: Separator heater
122: Separator roll
130: First electrode supply part
131: First electrode seating table
132: First electrode heater
133: First electrode roll
134: First cutter
135: First conveyor belt
136: First electrode supply head
140: Second electrode supply part
141: Second electrode seating table
142: Second electrode heater
143: Second electrode roll
144: Second cutter
145: Second conveyor belt
146: Second electrode supply head
150: First electrode stacking part
151: First suction head
151a: Vacuum inlet
151b: Bottom surface
152: First head heater
153: First movement part
160: Second electrode stacking part
161: Second suction head
162: Second head heater
163: Second movement part
170: Gripper
171: First gripper
172: Second gripper
180: Press part
181: First pressing block
182: Second pressing block
183, 184: Press heater
290: Vision device
291: First camera
292: Second camera
R: Rotation part
S: Stack

### [Best Mode]

Hereinafter, the present invention will be described in detail so that those with ordinary skill in the art to which the present invention pertains may easily carry out the present invention. However, the present invention may be implemented in various different ways and is not limited to the embodiments described herein. The scope of the invention is defined by the appended claims.

Throughout the specification, unless explicitly described to the contrary, the word "comprise" or "include" and variations, such as "comprises", "comprising", "includes" or "including", means the further inclusion of stated constituent elements, not the exclusion of any other constituent elements.

In the present specification, the term 'p to q' means 'p or more and q or less'.

In the present specification, a configuration in which the first electrode and the second electrode are stacked such that the first electrode and the second electrode are alternately disposed between the folded separators is referred to as zigzag stacking.

The folded separators may mean separators stacked while overlapping one another in a zigzag manner. More specifically, the separators are stacked in a zigzag manner while being folded in a shape in which the separators are alternately disposed at a left side of a stacking axis and a right side of the stacking axis based on the stacking axis. Further, the first and second electrodes are alternately disposed and stacked between the stacked separators. In this case, the stacking axis means an axis parallel to a direction in which the first electrode, the separator, and the second electrode are stacked. The stacking axis means an imaginary axis passing through a center of the stack in which the electrodes and the separator are stacked.

In the present specification, the term "heating" means a heating process.

In the present specification, the term "stack" may correspond to an incomplete electrode assembly. In addition, in the present specification, a case in which a step of heating and pressing the stack is completed may represent a complete electrode assembly. Unless otherwise particularly mentioned, the electrode assembly in the present specification means a complete electrode assembly.

Further, in the description of the present invention, the specific descriptions of well-known related technologies will be omitted when it is determined that the specific descriptions may unnecessarily obscure the subject matter of the present invention.

As recited in claim 1, the present invention provides a method of manufacturing an electrode assembly, the method including: manufacturing a stack by stacking first electrodes, separators, and second electrodes on a stack table so that the first electrodes and the second electrodes are alternately disposed between the folded separators; fixing the stack on the stack table by gripping a first area of the stack by means of a first gripper; heating and pressing only a second area of the stack fixed by the first gripper; releasing the first area of the stack by releasing the first gripper after the heating and pressing of the second area of the stack are completed; fixing the stack to the stack table by gripping the second area of the stack by means of a second gripper; and heating and pressing only the first area of the stack fixed by the second gripper, in which the first and second areas partially overlap each other or are different from each other.

In the present specification, the first and second areas mean areas of the stack fixed by the first or second gripper when the stack is made by alternately disposing and stacking the first and second electrodes between the folded separators.

Specifically, the separator, the first electrode, and the second electrode of the stack may be fixed by being gripped by the first gripper. In this case, the fixed area is defined as the first area. The separator, the first electrode, and the second electrode of the stack may be fixed by being gripped by the second gripper. In this case, the fixed area is defined as the second area.

That is, according to the present invention, the electrode assembly is manufactured by means of a process of distinguishing a predetermined area of the stack to be heated and pressed, when the stack is made by alternately disposing and stacking the first and second electrodes between the separators, so that the gripper is not heated or pressed.

Therefore, it is possible to prevent a problem in which the separator is creased or a position of the electrode is distorted during a process of zigzag folding and positioning the separator between the first and second electrodes. Therefore, it is possible to manufacture the electrode assemblies having uniform performance, improve energy density, and prevent the electrode of the electrode assembly from protruding to an external appearance of a battery.

In the present specification, the configuration in which the first area and the second area partially overlap means that boundaries between the first and second areas may partially overlap one another during the process of heating and pressing the stack in which the first and second electrodes are alternately disposed and stacked.

In the present specification, the configuration in which the first and second areas are different from each other means that the first and second areas are completely different from each other during the process of heating and pressing the stack made by alternately disposing and stacking the first and second electrodes, such that the second area is not heated and pressed while the first area is heated and pressed, and in contrast, the first area is not heated and pressed while the second area is heated and pressed.

According to the embodiment of the present invention, the first and second areas may be different from each other. That is, in case that the first and second areas are different from each other, the gripper is not heated and pressed, and no area occurs on which heating and pressing are repeatedly applied, which may more effectively prevent damage to the electrode or separator or the crease of the separator.

According to the embodiment of the present invention, the method further including: supplying the first electrode to the stack table; supplying the second electrode to the stack table; and supplying the separator to the stack table, in which the manufacturing of the stack by stacking the first electrodes, the separators, and the second electrodes on the stack table so that the first and second electrodes are alternately disposed between the folded separators includes: continuously supplying the separator, which is supplied to the stack table, to the stack table; rotating the stack table to one side to allow the stack table to face the first electrode when the first electrode is stacked on the stack table; and rotating the stack table to the other side to allow the stack table to face the second electrode when the second electrode is stacked, and in which the rotating of the stack table to one side to allow the stack table to face the first electrode and the rotating of the stack table to the other side to allow the stack table to face the second electrode when the second electrode is stacked may be alternately performed.

That is, according to the embodiment of the present invention, the method may further include the supplying of the first electrode to the stack table; the supplying of the second electrode to the stack table; and the supplying of the separator to the stack table.

In this case, according to the embodiment of the present invention, the supplying of the first electrode to the stack table, the supplying of the second electrode to the stack table, and the supplying of the separator to the stack table may respectively supply the first electrode, the second electrode, and the separator to the stack table while heating the first electrode, the second electrode, and the separator. That is, the method may supply the first electrode, the second electrode, and the separator while heating the first electrode, the second electrode, and the separator.

According to the embodiment of the present invention, the supplying of the first electrode to the stack table may include supplying the first electrode to the stack table while heating the first electrode.

According to the embodiment of the present invention, the supplying of the second electrode to the stack table may include supplying the second electrode to the stack table while heating the second electrode.

According to the embodiment of the present invention, the supplying of the separator to the stack table may include supplying the separator to the stack table while heating the separator.

In case that the first electrode, the second electrode, and the separator are heated and supplied to the stack table, the process of heating and pressing the stack may be more efficiently performed, which may reduce process costs and time.

According to the embodiment of the present invention, the heating and pressing of only the first or second area of the stack may include: heating the stack by heating the stack table body; and surface-pressing only the first or second area of the stack by moving a pair of pressing blocks in a direction in which the pair of pressing blocks face each other.

According to the embodiment of the present invention, the heating and pressing of only the first or second area of the stack may be performed under a condition of a temperature of 30°C or more and 100°C or less, particularly 35°C or more and 95°C or less. However, the present invention is not limited thereto.

According to the embodiment of the present invention, the heating and pressing of only the first or second area of the stack may be performed under a condition of pressure of 1 MPa or more and 5 MPa or less, particularly 1.5 MPa or more and 5 MPa or less.

According to the embodiment of the present invention, the heating and pressing of only the first or second area of the stack may be performed for 5 seconds or more and 60 seconds or less, particularly 5 seconds or more and 30 seconds or less.

According to the embodiment of the present invention, the heating and pressing of only the first or second area of the stack may include heating and pressing the stack for 5 seconds to 60 seconds under a condition of a temperature of 30°C to 100°C and a condition of pressure of 1 MPa to 5 MPa, particularly for 5 seconds to 30 seconds under a condition of a temperature of 35°C to 95°C and under a condition of pressure of 1.5 MPa to 5 MPa. However, the present invention is not limited thereto.

When the temperature, pressure, and time conditions are satisfied, it is possible to minimize damage to a unit electrode, which constitutes the electrode assembly, and ensure both a bonding force and permeability at an appropriate level between the electrode and the separator that constitute the electrode assembly.

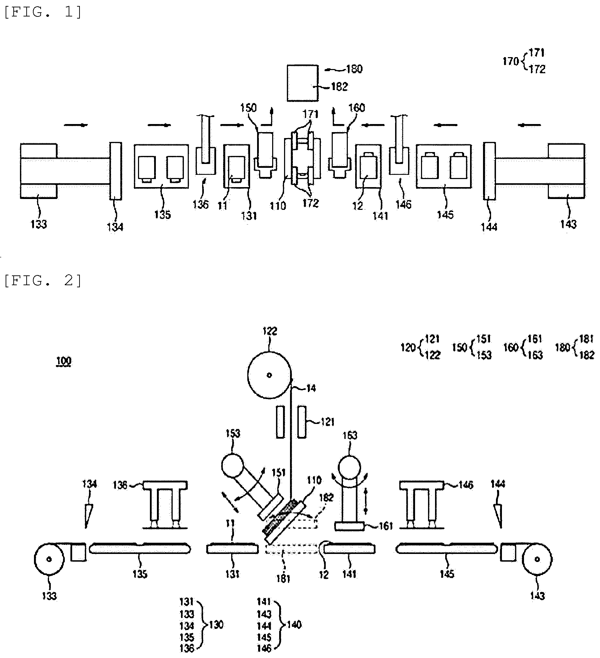

FIG. 1 is a top plan view exemplarily illustrating an electrode assembly manufacturing apparatus according to the embodiment of the present invention, and FIG. 2 is a front view illustrating a concept of the electrode assembly manufacturing apparatus according to the embodiment of the present invention. In this case, for convenience, a separator supply part 120 illustrated in FIG. 2 is omitted in FIG. 1. A gripper 170 illustrated in FIG. 1 is omitted in FIG. 2. A press part 180 positioned at a rear side in the top plan view is indicated by the dotted line.

With reference to FIGS. 1 to 2, an electrode assembly manufacturing apparatus 100 according to the embodiment of the present invention includes a stack table 110, the separator supply part 120 configured to supply the separator 14 while heating the separator 14, a first electrode supply part 130 configured to supply the first electrode 11 while heating the first electrode 11, a second electrode supply part 140 configured to supply the second electrode 12 while heating the second electrode 12, a first electrode stacking part 150 configured to stack the first electrode 11 on the stack table 110, a second electrode stacking part 160 configured to stack the second electrode 12 on the stack table 110, and the press part 180 configured to bond the first electrode 11, the separator 14, and the second electrode 12. In addition, the electrode assembly manufacturing apparatus 100 according to the embodiment of the present invention may further include the gripper 170 configured to fix the first electrode 11 and the second electrode 12 when the first electrode 11 and the second electrode 12 are stacked on the stack table 110.

In the present invention, the gripper includes a first gripper configured to fix the first area of the stack, and a second gripper configured to fix the second area of the stack. The materials or operating methods of the first and second grippers may be identical to each other, except that the areas to be fixed are different from each other.

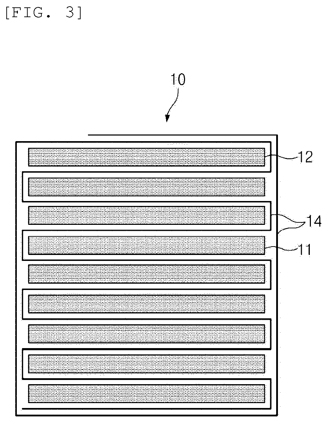

FIG. 3 is a cross-sectional view exemplarily illustrating an electrode assembly manufactured by the electrode assembly manufacturing method according to the embodiment of the present invention.

In addition, the embodiment of the present invention provides the electrode assembly manufacturing apparatus that manufactures the electrode assembly by stacking the first electrode, the separator, and the second electrode and includes: the stack table on which the first electrode, the separator, and the second electrode are stacked in the form of the stack in which the first and second electrodes are alternately disposed between the folded separators; the first gripper configured to grip the first area of the stack and fix the stack to the stack table; the second gripper configured to grip the second area of the stack and fix the stack to the stack table; and the press part positioned between the first gripper and the second gripper and configured to bond the first electrode and the second electrode by heating and pressing only the first or second area of the stack, in which the first and second areas partially overlap each other or are different from each other.

The first and second areas of the electrode assembly manufacturing apparatus according to the embodiment of the present invention may be different from each other. That is, in case that the first and second areas are different from each other even in the electrode assembly manufacturing apparatus, the gripper is not heated and pressed, and no area occurs on which heating and pressing are repeatedly applied, which may more effectively prevent damage to the electrode or separator or the crease of the separator.

When the electrode assembly manufacturing apparatus according to the present invention is used, the electrode assembly is manufactured by means of a process of distinguishing a predetermined area of the stack to be heated and pressed, when the stack is made by alternately disposing and stacking the first and second electrodes between the separators, so that the gripper is not heated or pressed. Therefore, it is possible to prevent a problem in which the separator is creased or a position of the electrode is distorted during a process of zigzag folding and positioning the separator between the first and second electrodes. Therefore, it is possible to manufacture the electrode assemblies having uniform performance, improve energy density, and prevent the electrode of the electrode assembly from protruding to an external portion of a battery.

In the embodiment of the present invention, the first electrode supply part, which supplies the first electrode, and the second electrode supply part, which supplies the second electrode, may respectively supply the first and second electrodes while heating the first and second electrodes.

In the embodiment of the present invention, the first electrode supply part may supply the first electrode while heating the first electrode.

In the embodiment of the present invention, the second electrode supply part may supply the second electrode while heating the second electrode.

### [Mode for Invention]

Hereinafter, the electrode assembly manufacturing apparatus according to the embodiment of the present invention will be described in more detail with reference to FIGS. 1 to 12.

FIG. 3 is a cross-sectional view exemplarily illustrating an electrode assembly manufactured by the electrode assembly manufacturing apparatus according to the embodiment of the present invention.

With reference to FIGS. 1 to 3, the electrode assembly manufacturing apparatus 100 according to the embodiment of the present invention (see an apparatus for manufacturing the electrode assembly 10 by stacking the first electrode 11, the separator 14, and the second electrode 12.

The electrode assembly 10 may be a power generation element that may be charged or discharged. The electrode assembly 10 may be provided in the form in which the first electrode 11, the separator 14, and the second electrode 12 are alternately stacked. In this case, for example, in the electrode assembly 10, the separator 14 is folded in a zigzag manner, and the first electrode 11 and the second electrode 12 are alternately disposed between the folded separators 14. In this case, the separator 14 may surround an outermost periphery of the electrode assembly 10.

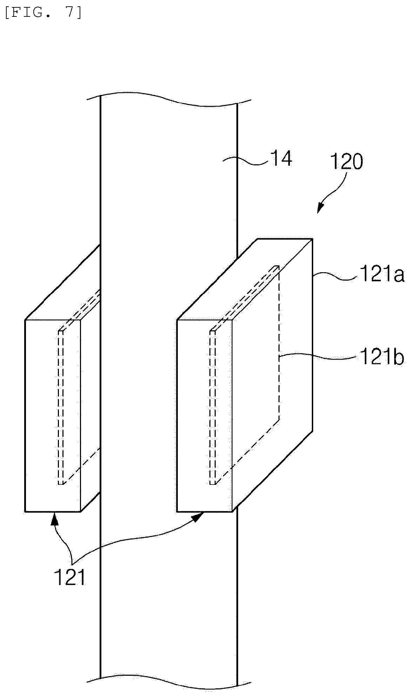

FIG. 7 is a perspective view illustrating a separator supply part of the electrode assembly manufacturing apparatus according to the embodiment of the present invention.

See FIGS. 2 and 7, the separator supply part 120 may supply the separator 14 to the stack table 110 while heating the separator 14. In addition, the separator supply part 120 may include a separator heating part 121 having a passageway through which the separator 14 passes and is configured to heat the separator 14 passing through the passageway.

The separator heating part 121 may include a pair of bodies 121a, and a separator heater 121b configured to heat the bodies 121a. The pair of bodies 121a may be positioned to be spaced apart from each other at a predetermined distance so that the separator 14 may pass. In this case, for example, the separator 14 passes through the separator heating part 121 in a non-contact manner, and the separator 14 may be heated in a non-contact manner. Meanwhile, for example, the body 121a may be provided in the form of a quadrangular block.

Meanwhile, the separator supply part 120 may further include a separator roll 122 around which the separator 14 is wound. In this case, the separator 14 wound around the separator roll 122 may be gradually unwound and supplied to the stack table 110 while passing through the separator heating part 121.

According to the embodiment of the present invention, the stack table may include a heater configured to heat the stack by heating the stack table body. The press part may include a pair of pressing blocks capable of surface-pressing the stack. The surface-pressing on the stack is performed only on the first or second area of the stack, and the first area and the second area are not surface-pressed simultaneously.

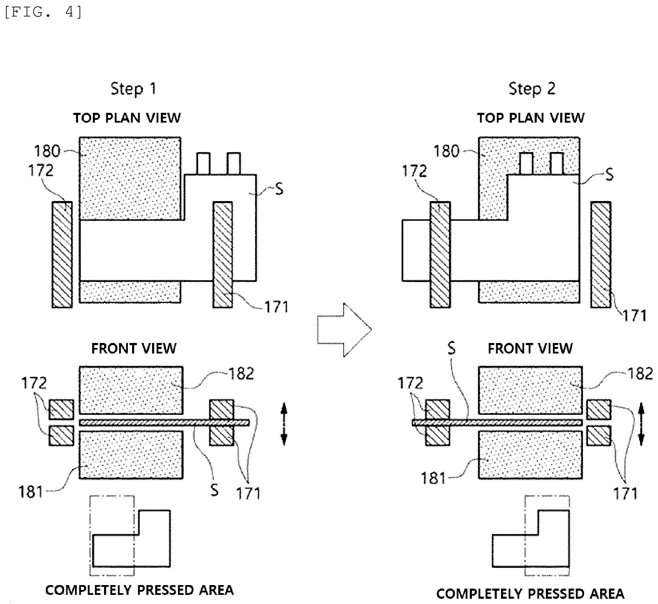

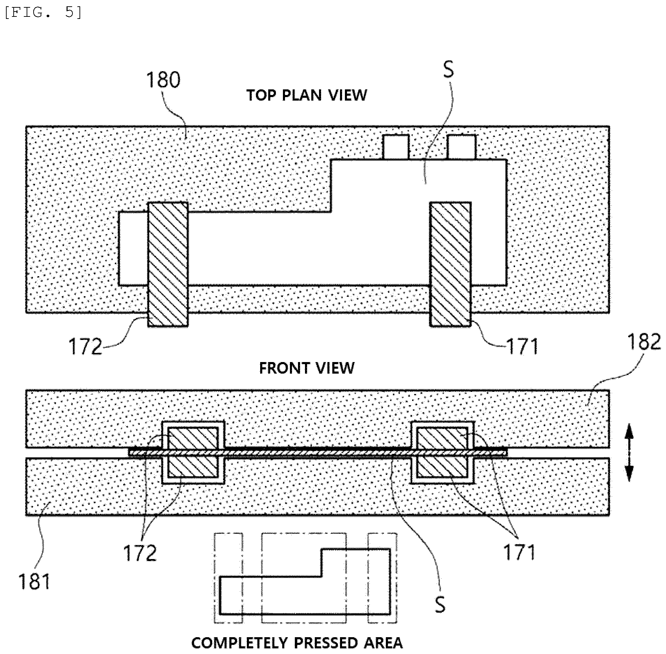

FIG. 4 is a view illustrating an electrode assembly manufacturing method using the electrode assembly manufacturing apparatus according to the embodiment of the present invention, and FIG. 5 is a view illustrating an electrode assembly manufacturing method using an electrode assembly manufacturing apparatus in the related art.

That is, with reference to FIG. 4, the first area of the stack S, in which the first electrode 11 and the second electrode 12 are alternately disposed between the folded separators 14, may be gripped and fixed by the first gripper 171, and only the first area of the stack may be heated and pressed by the press part 180 positioned between the first gripper 171 and the second gripper 172, such that the first electrode 11, the separator 14, and the second electrode 12 in the first area may be bonded. Thereafter, the first gripper is released such that the first area of the stack is unfixed, and the second area of the stack is fixed by the second gripper 172. The first electrode 11, the separator 14, and the second electrode 12 in the first area may be bonded by heating and pressing only the second area of the stack by the press part positioned between the first gripper 171 and the second gripper 172. Therefore, it is possible to prevent the gripper from being directly heated and pressed. As described below, the press part 180 may include the pair of pressing blocks 181 and 182. In this case, a process of moving the stack from the stack table 110 to the press part 180 may be included.

In contrast, as illustrated in FIG. 5, the electrode assembly manufacturing method using the electrode assembly manufacturing apparatus in the related art directly heats and presses portions corresponding to the first gripper 171 and the second gripper 172. In this case, the gripper portion receives pressure less than pressure applied to the other portions. For this reason, the separator is highly likely to be creased. For reference, the description of the configuration in FIG. 4 may be applied, except that the portions corresponding to the first gripper 171 and the second gripper 172 are directly heated and pressed.

That is, in the case that the electrode assembly manufacturing apparatus and the electrode assembly manufacturing method according to the present invention are used, it is possible to manufacture the electrode assembly such that the electrodes of the stack, in which the first and second electrodes are alternately disposed between the folded separators, may be fixed without being distorted, and the separator may not be creased.

According to the embodiment of the present invention, the press part may include the heater. More specifically, the press part 180 may further include press heaters 183 and 184 configured to heat the pair of pressing blocks 181 and 182. The pair of pressing blocks 181 and 182 may heat and press the stack S of the first electrode 11, the separator 14, and the second electrode 12. Therefore, thermal bonding may be more properly performed between the first electrode 11, the separator 14, and the second electrode 12 at the time of pressing the stack S by the press part 180, such that the first electrode 11, the separator 14, and the second electrode 12 may be more securely bonded.

That is, the stack table body may be heated, and the press part having the heater may directly heat and press the first electrode, the separator, and the second electrode that are stacked, such that the first electrode, the separator, and the second electrode 12 may be bonded.

In addition, as described above, the press part 180 may include the pair of pressing blocks 181 and 182. The pair of pressing blocks 181 and 182 may surface-press the stack S made by stacking the first electrode 11, the separator 14, and the second electrode 12 while moving in the directions toward each other.

In this case, in case that the separator 14 surrounds an outer surface of the stack S, an outer portion of the separator 14 positioned at the outermost periphery of the stack S may be bonded to inner portions of the first electrode 11, the second electrode 12, and the separator 14 that face the outer portion of the separator 14. Therefore, it is possible to more effectively prevent the first electrode 11, the second electrode 12, and the separator 14 from deviating from their positions and prevent the stacked state from collapsing during the process of forming the electrode assembly 10 by stacking the first electrode 11, the separator 14, and the second electrode 12.

Pressing surfaces of the pair of pressing blocks 181 and 182 are formed as flat surfaces. Horizontal and vertical lengths of the pressing surface may be longer than horizontal and vertical lengths of the stack S made by stacking the first electrode 11, the separator 14, and the second electrode 12.

Further, the pair of pressing blocks 181 and 182 may include a first pressing block 181 and a second pressing block 182. The first pressing block 181 and the second pressing block 182 may each be provided in the form of a quadrangular block having a rectangular parallelepiped shape.

According to the embodiment of the present invention, the apparatus may further include: the first electrode supply part configured to supply the first electrode; the second electrode supply part configured to supply the second electrode; the first electrode stacking part configured to stack the first electrode, which is supplied from the first electrode supply part, on the stack table; and the second electrode stacking part configured to stack the second electrode, which is supplied from the second electrode supply part, on the stack table.

In addition, according to the embodiment of the present invention, the first electrode supply part may include the first electrode seating table on which the first electrode is seated before the first electrode is stacked on the stack table by the first electrode stacking part. The second electrode supply part may include the second electrode seating table on which the second electrode is seated before the second electrode is stacked on the stack table by the second electrode stacking part.

According to the embodiment of the present invention, the first electrode stacking part may include a first suction head configured to suck the first electrode seated on the first electrode seating table by vacuum. The second electrode stacking part may include a second suction head configured to suck the second electrode seated on the second electrode seating table by vacuum.

According to the embodiment of the present invention, the manufacturing apparatus may further include a rotation part configured to rotate the stack table. The first electrode stacking part is provided at one side of the rotation part, and the second electrode stacking part is provided at the other side of the rotation part, such that the separator may be folded in a zigzag manner so as to be positioned between the first electrode and the second electrode. The rotation part may alternately perform the operation of rotating the stack table toward one side to allow the stack table to face the first suction head of the first electrode stacking part at the time of stacking the first electrode and the operation of rotating the stack table toward the other side to allow the stack table to face the second suction head of the second electrode stacking part at the time of stacking the second electrode.

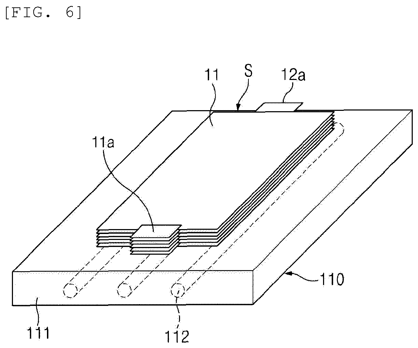

FIG. 6 is a perspective view illustrating a stack table of the electrode assembly manufacturing apparatus according to the embodiment of the present invention.

With reference to FIGS. 2 and 6, the first electrode 11, the separator 14, and the second electrode 12 may be stacked on the stack table 110 so that the first electrode 11 and the second electrode 12 are alternately disposed between the folded separators 14.

In addition, the stack table 110 may include a table body 111 on which the first electrode 11, the separator 14, and the second electrode 12 are stacked, and a stack table heater 112 configured to heat the stack S by heating the table body 111.

The first electrode 11 may be a positive electrode, and the second electrode 12 may be a negative electrode, but the present invention is not necessarily limited thereto. For example, the first electrode 11 may be a negative electrode, and the second electrode 12 may be a positive electrode.

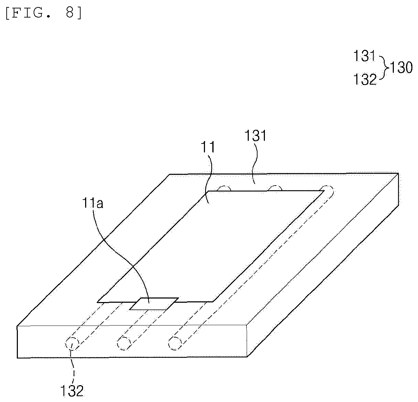

FIG. 8 is a perspective view illustrating a first electrode seating table of the electrode assembly manufacturing apparatus according to the embodiment of the present invention.

With reference to FIGS. 2 and 8, the first electrode supply part 130 may supply the first electrode 11 to the first electrode stacking part 150 while heating the first electrode 11.

In addition, the first electrode supply part 130 may include: a first electrode seating table 131 on which the first electrode 11 is seated before the first electrode 11 is stacked on the stack table 110 by the first electrode stacking part 150; and a first electrode heater 132 configured to heat the first electrode 11 by heating the first electrode seating table 131.

Meanwhile, the first electrode supply part 130 may further include: a first electrode roll 133 around which the first electrode 11 is wound in the form of a sheet; a first cutter 134 configured to form the first electrode 11 having a predetermined size by cutting the first electrode 11 at a predetermined interval when the first electrode 11 wound in the form of a sheet around the first electrode roll 133 is unwound and supplied; a first conveyor belt 135 configured to convey the first electrode 11 cut by the first cutter 134; and a first electrode supply head 136 configured to suck the first electrode 11, which is conveyed by the first conveyor belt 135, by vacuum and seat the first electrode 11 on the first electrode seating table 131. In this case, the first cutter 134 may cut the first electrode 11 in the form of a sheet so that a first electrode tab 11a protrudes from an end of the first electrode 11.

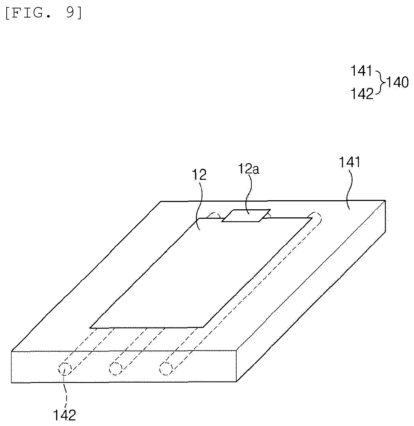

FIG. 9 is a perspective view illustrating a second electrode seating table of the electrode assembly manufacturing apparatus according to the embodiment of the present invention.

With reference to FIGS. 2 and 9, the second electrode supply part 140 may supply the second electrode 12 to the second electrode stacking part 160 while heating the second electrode 12.

In addition, the second electrode supply part 140 may include: a second electrode seating table 141 on which the second electrode 12 is seated before the second electrode 12 is stacked on the stack table 110 by the second electrode stacking part 160; and a second electrode heater 142 configured to heat the second electrode 12 by heating the second electrode seating table 141.

Meanwhile, the second electrode supply part 140 may further include: a second electrode roll 143 around which the second electrode 12 is wound in the form of a sheet; a second cutter 144 configured to form the second electrode 12 having a predetermined size by cutting the second electrode 12 at a predetermined interval when the second electrode 12 wound in the form of a sheet around the second electrode roll 143 is unwound and supplied; a second conveyor belt 145 configured to convey the second electrode 12 cut by the second cutter 144; and a second electrode supply head 146 configured to suck the second electrode 11, which is conveyed by the second conveyor belt 145, by vacuum and seat the second electrode 12 on the second electrode seating table 141. In this case, the second cutter 144 may cut the second electrode 12 in the form of a sheet so that a second electrode tab 12a protrudes from an end of the second electrode 12.

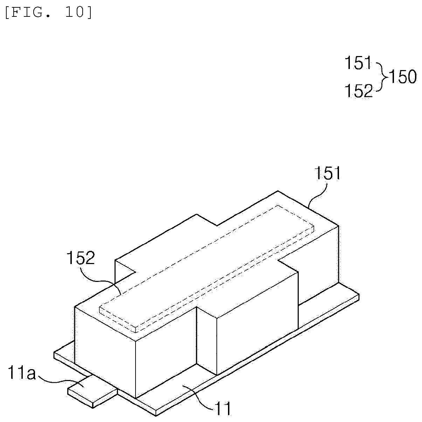

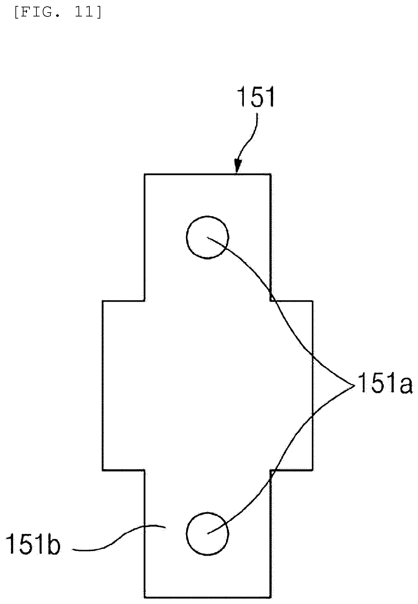

FIG. 10 is a perspective view illustrating a first suction head of the electrode assembly manufacturing apparatus according to the embodiment of the present invention, and FIG. 11 is a bottom plan view illustrating the first suction head of the electrode assembly manufacturing apparatus according to the embodiment of the present invention.

With reference to FIGS. 2, 10, and 11, the first electrode stacking part 150 may stack the first electrode 11 on the stack table 110.

In addition, the first electrode stacking part 150 may include a first suction head 151, a first head heater 152, and a first movement part 153.

The first suction head 151 may suck, by vacuum, the first electrode 11 seated on the first electrode seating table 131. In this case, the first suction head 151 has a vacuum inlet 151a formed in a bottom surface 151b and sucks the first electrode 11 through the vacuum inlet 151a, thereby fixing the first electrode 11 on the bottom surface 151b of the first suction head 151. In this case, the first suction head 151 may have therein a passageway that connects the vacuum inlet 151a and a vacuum suction device (not illustrated).

The first head heater 152 may heat the first suction head 151 and heat the first electrode 11, which is sucked by the first suction head 151, by heating the first suction head 151.

The first movement part 153 may move the first suction head 151 to the stack table 110 so that the first suction head 151 may stack the first electrode 11, which is seated on the first electrode seating table 131, on the stack table 110.

Meanwhile, with reference to FIG. 2, the second electrode stacking part 160 may stack the second electrode 12 on the stack table 110. In this case, the second electrode stacking part 160 may have the same structure as the first electrode stacking part 150. In this case, the second electrode stacking part 160 may include a second suction head 161, a second head heater (not illustrated), and a second movement part 163.

The second suction head 161 may suck, by vacuum, the second electrode 12 seated on the second electrode seating table 141.

The second head heater may heat the second suction head 161 and heat the second electrode 12, which is sucked by the second suction head 161, by heating the second suction head 161.

The second movement part 163 may move the second suction head 161 to the stack table 110 so that the second suction head 161 may stack the second electrode 12, which is seated on the first electrode seating table 141, on the stack table 110.

According to the embodiment of the present invention, the electrode assembly manufacturing apparatus includes the gripper configured to grip the first or second electrode and fix the first or second electrode to the stack table at the time of stacking the first or second electrode on the stack table.

According to the embodiment of the present invention, the gripper may press and fix the upper surface of the first electrode stacked at an uppermost side of the stack table at the time of stacking the first electrode on the stack table and press and fix an upper surface of the second electrode stacked at the uppermost side of the stack table at the time of stacking the second electrode on the stack table.

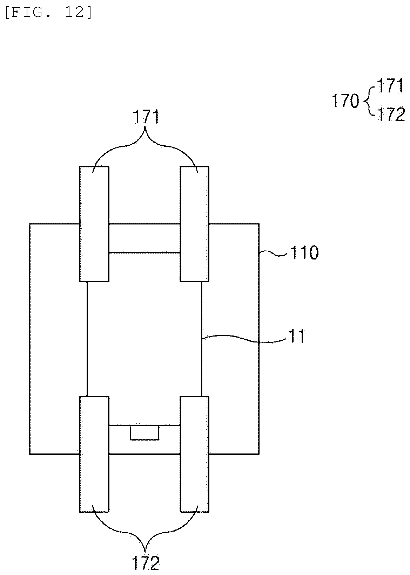

FIG. 12 is a top plan view illustrating a gripper and the stack table of the electrode assembly manufacturing apparatus according to the embodiment of the present invention.

With reference to FIGS. 1 and 12, the gripper 170 may hold and fix the first electrode 11 or the second electrode 12 to the stack table 110 at the time of stacking the first electrode 11 or the second electrode 12 on the stack table 110.

In addition, the gripper 170 may press and fix the upper surface of the first electrode 11 stacked at the uppermost side of the stack table 110 at the time of stacking the first electrode 11 on the stack table 110 and press and fix the upper surface of the second electrode 12 stacked at the uppermost side of the stack table 110 at the time of stacking the second electrode 12 on the stack table 110.

That is, at the time of forming the stack so that the first electrode 11 and the second electrode 12 are stacked to be positioned between the separators 14, the gripper 170 may hold the stack by pressing the surface positioned at the uppermost side of the stack in the direction toward the stack table 110, thereby preventing the stack from separating from the stack table 110.

In the present specification, the gripper may be referred to as the first and second grippers in accordance with an area in which the stack is fixed. The above-mentioned description of the gripper may be applied to the functions and operational principles of the first and second grippers.

That is, the gripper 170 may include the first gripper 171 and the second gripper 172 and fix two opposite sides of the first electrode 11 or the second electrode 12. However, in the present invention, the gripper may fix only one side without fixing the two opposite sides and perform the heating and pressing processes.

In addition, when the gripper 170 holds the first electrode 11 or the second electrode 12 and then the stack table 110 rotates, the separator 14 may be unwound from the separator roll 122 in proportion to the rotation amount of the stack table 110 and supplied to the stack table 110.

Meanwhile, for example, the gripper 170 and the stack table 110 may be connected or coupled to a rotation device (not illustrated). In this case, for example, the rotation device may be configured as a mandrel. In this case, when the gripper 170 holds the first electrode 11 or the second electrode 12, the rotation device may rotate the gripper 170 and the stack table 110.

An operation of the electrode assembly manufacturing apparatus 100 according to the embodiment of the present invention will be described with reference to FIGS. 1 to 3. The separator 14 wound around the separator roll 122 is supplied while being heated by passing through the separator heating part 121 and stacked on the stack table 110, and the separator 14 is heated by the heated stack table 110.

Further, when the first electrode 11 is heated and supplied from the first electrode supply part 130 to the first electrode stacking part 150, the first electrode stacking part 150 stacks the first electrode 11 on the upper surface of the separator 14 stacked on the stack table 110 while heating first electrode 11.

In this case, the gripper 170 presses the upper surface of the first electrode 11, thereby fixing the first electrode 11 so that the first electrode 11 does not separate from the stack table 110.

Thereafter, when the stack table 110 rotates in the direction toward the second electrode stacking part 160, the separator 14 is continuously supplied and covers the upper surface of the first electrode 11.

Further, the second electrode stacking part 160 stacks the second electrode 12, which is heated and supplied from the second electrode supply part 140, on a portion of the separator 14 that covers the upper surface of the first electrode 11. In this case, the second electrode stacking part 160 continuously heats the second electrode 12 as the second suction head 161 presses and heats the second electrode 12.

In this case, the gripper 170, which presses the upper surface of the first electrode 11, moves away from the pressing portion and then presses the upper surface of the second electrode 12, thereby preventing the stack including the second electrode 12 from separating from the stack table 110.

Thereafter, the process of stacking the first electrode 11 and the second electrode 12 is repeated, such that the separator 14 is folded in a zigzag manner, and the stack may be formed in which the separator 14 is positioned between the first electrode 11 and the second electrode 12.

Further, the electrode assembly 10 may be manufactured by moving the stack to the press part 180 and bonding the first electrode 11, the separator 14, and the second electrode 12 which are pressed and heated when the press part 180 presses the stack while applying heat to the stack. In this case, the first electrode 11, the separator 14, and the second electrode 12, which are heated, may be thermally bonded as the press part 180 presses the first electrode 11, the separator 14, and the second electrode 12 while applying heat to the first electrode 11, the separator 14, and the second electrode 12.

The electrode assembly manufacturing apparatus 100 according to the embodiment of the present invention, which is configured as described above, stacks the first electrode 11, the separator 14, and the second electrode 12 while heating the first electrode 11, the separator 14, and the second electrode 12 and bonds the first electrode 11, the separator 14, and the second electrode 12 by pressing and heating the first electrode 11, the separator 14, and the second electrode 12 by using the press part 180. Therefore, it is possible to prevent the electrode assembly 10 from being unfolded and prevent the first electrode 11 and the second electrode 12 from deviating from the stacking positions on the electrode assembly 10.

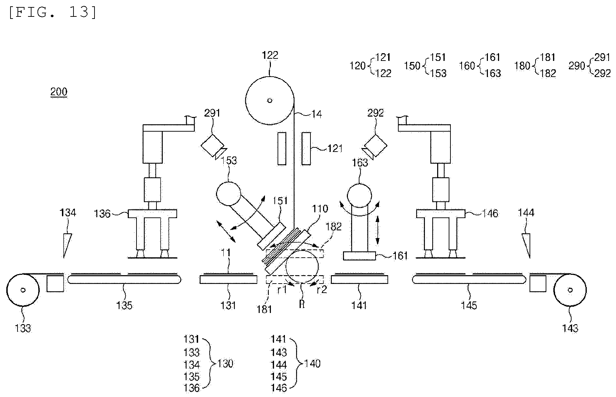

The electrode assembly manufacturing apparatus according to another embodiment of the present invention may further include a vision device configured to inspect the first electrode or the second electrode. FIG. 13 is a front view illustrating a concept of the electrode assembly manufacturing apparatus further including the vision device.

In FIG. 13, the gripper is omitted for convenience, and the press part 180 positioned at the rear side of the top plan view is indicated by the dotted line.

Referring to FIG. 13, an electrode assembly manufacturing apparatus 200 may include: the stack table 110, the separator supply part 120 configured to supply the separator 14, the first electrode supply part 130 configured to supply the first electrode 11, the second electrode supply part 140 configured to supply the second electrode 12, the first electrode stacking part 150 configured to stack the first electrode 11 on the stack table 110, the second electrode stacking part 160 configured to stack the second electrode 12 on the stack table 110, the press part 180 configured to bond the first electrode 11, the separator 14, and the second electrode 12, and the gripper 170 configured to fix the first electrode 11 and the second electrode 12 at the time of stacking the first electrode 11 and the second electrode 12 on the stack table 110 (see FIG. 12). The electrode assembly manufacturing apparatus 200 may further include a vision device 290 configured to vision-inspect the first and second electrodes 11 and 12 and the rotation part R for rotating the stack table 110.

That is, the electrode assembly manufacturing apparatus 200 in FIG. 13 differs from the electrode assembly manufacturing apparatus 100 according to the above-mentioned embodiment in that the electrode assembly manufacturing apparatus 200 further includes the rotation part R and the vision device 290.

In more detail, the vision device 290 of the electrode assembly manufacturing apparatus 200 according to another embodiment of the present invention may include a first camera 291 and a second camera 292.

The first camera 291 may capture an image of the first electrode 11 seated on the first electrode seating table 131 of the first electrode supply part 130. The second camera 292 may capture an image of the second electrode 12 seated on the second electrode seating table 141 of the second electrode supply part 140.

It is possible to inspect the stack quality of the first electrode 11 and the second electrode 12 on the basis of image information acquired by the first camera 291 and the second camera 292. In this case, it is possible to inspect seating position, sizes, stacked states, and the like of the first electrode 11 and the second electrode 12.

The rotation part R may rotate the stack table 110 in one direction r1 and the other direction r2. In this case, the first electrode stacking part 150 may be provided at one side of the rotation part R, and the first electrode stacking part 150 may be provided at the other side of the rotation part R.

In addition, the rotation part R may rotate the stack table 110 toward one side so that the stack table 110 faces the first suction head 151 at the time of stacking the first electrode 11. The rotation part R may rotate the stack table 110 toward the other side so that the stack table 110 faces the second suction head 161 at the time of stacking the second electrode 12.

Further, the rotation part R may alternately rotate the stack table 110 in the direction toward the first electrode stacking part 150 and the direction toward the second electrode stacking part 160, such that the separator 14 may be folded in a zigzag manner (zig zag folding) so as to be positioned between the first electrode 11 and the second electrode 12.

Hereinafter, an operation of the electrode assembly manufacturing apparatus 200 according to another embodiment of the present invention will be described.

With reference to FIGS. 1 and 13, the separator 14 wound around the separator roll 122 is supplied while being heated by passing through the separator heating part 121 and stacked on the stack table 110, and the separator 14 is heated by the heated stack table 110.

In addition, when the first electrode 11 is supplied and seated on the first electrode seating table 131 of the first electrode supply part 130, the vision device 290 is used to inspect stacking quality of the first electrode 11. In this case, the first electrode 11 is heated by the first electrode seating table 131 heated by the first electrode heater 132.

Further, when the heated first electrode 11 is supplied to the first electrode stacking part 150, the first electrode stacking part 150 stacks the first electrode 11 on the upper surface of the separator 14 stacked on the stack table 110.

In this case, the first gripper 170 presses the upper surface of the first electrode 11, thereby fixing the stack so that the first electrode 11 does not separate from the stack table 110.

Thereafter, when the rotation part R rotates the stack table 110 in the direction toward the second electrode stacking part 160, the separator 14 is continuously supplied and covers the upper surface of the first electrode 11.

Meanwhile, when the second electrode 12 is supplied and seated on the second electrode seating table 141 of the second electrode supply part 140, the vision device 290 is used to inspect stacking quality of the second electrode 12. In this case, the second electrode 12 is heated by the second electrode seating table 141 heated by the second electrode heater.

Further, when the heated second electrode 12 is supplied to the second electrode stacking part 160, the second electrode stacking part 160 stacks the second electrode 12 on the upper surface of the separator 14 stacked on the stack table 110.

In this case, the gripper 170, which presses the upper surface of the first electrode 11, moves away from the pressing portion and then presses the upper surface of the second electrode 12, thereby preventing the stack including the second electrode 12 from separating from the stack table 110.

Thereafter, the process of stacking the first electrode 11 and the second electrode 12 while rotating the stack table 110 is repeated, such that the separator 14 is folded in a zigzag manner, and the stack may be formed in which the separator 14 is positioned between the first electrode 11 and the second electrode 12.

Further, the electrode assembly 10 may be manufactured by moving the stack to the press part 180 and bonding the first electrode 11, the separator 14, and the second electrode 12 which are pressed and heated when the press part 180 presses the stack while applying heat to the stack. In this case, the first electrode 11, the separator 14, and the second electrode 12, which are heated, may be thermally bonded as the press part 180 presses the first electrode 11, the separator 14, and the second electrode 12 while applying heat to the first electrode 11, the separator 14, and the second electrode 12 (see FIG. 3).

In this case, only the first area of the stack, in which the first and second electrodes are alternately disposed between the folded separators, is fixed by the first gripper, and only the second area of the stack is heated and pressed. Thereafter, only the second area of the stack is fixed by the second gripper, and only the first area of the stack is heated and pressed.

As described above, the boundaries between the first and second areas may partially overlap. However, the first and second areas may be different from each other so that there are no areas that overlap.

That is, the electrode assembly manufacturing apparatus 200 also manufactures the electrode assembly while distinguishing the area in which the stack is fixed and the area in which the stack is heated and pressed, similar to the above-mentioned method, except that the vision device is provided.

In addition, the descriptions related to the configurations of the apparatus for manufacturing an electrode assembly and the manufacturing apparatus according to the present invention may also be applied to the manufacturing method according to the present invention and the electrode assembly manufactured by the manufacturing method according to the present invention.

## Claims

1. A method of manufacturing an electrode assembly (10), the method comprising:
manufacturing a stack (S) by stacking first electrodes (11), separators (14), and second electrodes (12) on a stack table (110) so that the first electrodes (11) and the second electrodes (12) are alternately disposed between the folded separators (14);
fixing the stack (S) on the stack table (110) by gripping a first area of the stack (S) by means of a first gripper (171);
heating and pressing only a second area of the stack (S) fixed by the first gripper (171);
releasing the first area of the stack (S) by releasing the first gripper (171) after the heating and pressing of the second area of the stack (S) are completed;
fixing the stack (S) to the stack table (110) by gripping the second area of the stack (S) by means of a second gripper (172); and
heating and pressing only the first area of the stack (S) fixed by the second gripper (172),
wherein the first and second areas partially overlap each other or are different from each other.

2. The method of claim 1, further comprising:
supplying the first electrode (11) to the stack table (110);
supplying the second electrode (12) to the stack table (110); and
supplying the separator (14) to the stack table (110),
wherein the manufacturing of the stack (S) by stacking the first electrodes (11), the separators (14), and the second electrodes (12) on the stack table (110) so that the first and second electrodes (12) are alternately disposed between the folded separators (14) comprises:
continuously supplying the separator (14), which is supplied to the stack table (110), to the stack table (110);
rotating the stack table (110) to one side to allow the stack table (110) to face the first electrode (11) when the first electrode (11) is stacked on the stack table (110); and
rotating the stack table (110) to the other side to allow the stack table (110) to face the second electrode (12) when the second electrode (12) is stacked, and
wherein the rotating of the stack table (110) to one side to allow the stack table (110) to face the first electrode (11) and the rotating of the stack table (110) to the other side to allow the stack table (110) to face the second electrode (12) when the second electrode (12) is stacked are alternately performed.

3. The method of claim 2, wherein the supplying of the first electrode (11) to the stack table (110), the supplying of the second electrode (12) to the stack table (110), and the supplying of the separator (14) to the stack table (110) respectively includes supplying the first electrode (11), the second electrode (12), and the separator (14) to the stack table (110) while heating the first electrode (11), the second electrode (12), and the separator (14).

4. The method of claim 1, wherein the heating and pressing of only the first or second area of the stack (S) comprises:
heating the stack (S) by heating a stack table body (111); and
surface-pressing only the first or second area of the stack (S) by moving a pair of pressing blocks (181 182) in a direction in which the pair of pressing blocks (181, 182) face each other.

5. The method of claim 1, wherein the heating and pressing of only the first or second area of the stack (S) is performed for 5 seconds to 60 seconds under a temperature of 30°C to 100°C and pressure of 1 MPa to 5 MPa.

6. An apparatus (100, 200) for manufacturing an electrode assembly (10), which manufactures the electrode assembly (10) by stacking a first electrode (11), a separator (14), and a second electrode (12), the apparatus comprising:
a stack table (110) on which the first electrode (11), the separator (14), and the second electrode (12) are stacked in the form of a stack (S) in which the first and second electrodes (11, 12) are alternately disposed between a folded separators (14);
a first gripper (171) configured to grip a first area of the stack (S) and fix the stack (S) to the stack table (110);
a second gripper (172) configured to grip a second area of the stack (S) and fix the stack (S) to the stack table (110); **characterized by**
a press part (180) positioned between the first gripper (171) and the second gripper (172) and configured to bond the first electrode (11), the separator (14), and the second electrode (12) by heating and pressing only the first or second area of the stack (S),
wherein the first and second areas partially overlap each other or are different from each other.

7. The apparatus of claim 6, wherein the stack table (110) comprises a heater (112) configured to heat the stack (S) by heating a stack table body (111), and
wherein the press part (180) comprises a pair of pressing blocks (181, 182) configured to surface-pressing the stack (S).

8. The apparatus of claim 6, further comprising:
a first electrode supply part (130) configured to supply the first electrode (11);
a second electrode supply part (140) configured to supply the second electrode (12);
a first electrode stacking part (150) configured to stack the first electrode (11), which is supplied from the first electrode supply part (130), on the stack table (110); and
a second electrode stacking part (160) configured to stack the second electrode (12), which is supplied from the second electrode supply part (140), on the stack table (110).

9. The apparatus of claim 8, wherein the first electrode supply part (130) comprises a first electrode seating table (131) on which the first electrode (11) is seated before the first electrode (11) is stacked on the stack table (110) by the first electrode stacking part (150), and
wherein the second electrode supply part (140) comprises a second electrode seating table (141) on which the second electrode (12) is seated before the second electrode (12) is stacked on the stack table (110) by the second electrode stacking part (160).

10. The apparatus of claim 9, wherein the first electrode stacking part (150) comprises a first suction head (151) configured to suck the first electrode (11) seated on the first electrode seating table (131) by vacuum, and
wherein the second electrode stacking part (160) comprises a second suction head (161) configured to suck the second electrode (12) seated on the second electrode seating table (141) by vacuum.

11. The apparatus of claim 10, further comprising:
a rotation part (R) configured to rotate the stack table (110),
wherein the first electrode stacking part (150) is provided at one side of the rotation part (R), and the second electrode stacking part (160) is provided at the other side of the rotation part (R), such that the separator (14) is folded in a zigzag manner so as to be positioned between the first electrode (11) and the second electrode (12),
wherein the rotation part (R) alternately performs an operation of rotating the stack table (110) toward one side to allow the stack table (110) to face the first suction head (151) of the first electrode stacking part (150) at the time of stacking the first electrode (11) and an operation of rotating the stack table (110) toward the other side to allow the stack table (110) to face the second suction head (161) of the second electrode stacking part (160) at the time of stacking the second electrode (12).

## Patentansprüche

1. Verfahren zur Herstellung einer Elektrodenanordnung (10), wobei das Verfahren umfasst:
Herstellen eines Stapels (S) durch Stapeln von ersten Elektroden (11), Separatoren (14) und zweiten Elektroden (12) auf einem Stapeltisch (110), so dass die ersten Elektroden (11) und die zweiten Elektroden (12) abwechselnd zwischen den gefalteten Separatoren (14) angeordnet sind;
Fixieren des Stapels (S) auf dem Stapeltisch (110) durch Greifen eines ersten Bereichs des Stapels (S) mittels eines ersten Greifers (171);
Erwärmen und Pressen nur eines zweiten Bereichs des Stapels (S), der durch den ersten Greifer (171) fixiert wird;
Freigeben des ersten Bereichs des Stapels (S) durch Loslassen des ersten Greifers (171), nachdem das Erwärmen und Pressen des zweiten Bereichs des Stapels (S) abgeschlossen ist;
Fixieren des Stapels (S) auf dem Stapeltisch (110) durch Greifen des zweiten Bereichs des Stapels (S) mittels eines zweiten Greifers (172); und
Erwärmen und Pressen nur des ersten Bereichs des Stapels (S), der durch den zweiten Greifer (172) fixiert wird,
wobei der erste und der zweite Bereich einander teilweise überlappen oder voneinander verschieden sind.

2. Verfahren nach Anspruch 1, ferner umfassend:
Zuführen der ersten Elektrode (11) zu dem Stapeltisch (110);
Zuführen der zweiten Elektrode (12) zu dem Stapeltisch (110); und
Zuführen des Separators (14) zu dem Stapeltisch (110),
wobei die Herstellung des Stapels (S) durch Stapeln der ersten Elektroden (11), der Separatoren (14) und der zweiten Elektroden (12) auf dem Stapeltisch (110), so dass die ersten und zweiten Elektroden (12) abwechselnd zwischen den gefalteten Separatoren (14) angeordnet sind, umfasst:
kontinuierliches Zuführen des Separators (14), der dem Stapeltisch (110) zugeführt wird, zum Stapeltisch (110);
Drehen des Stapeltisches (110) zu einer Seite, damit der Stapeltisch (110) der ersten Elektrode (11) zugewandt ist, wenn die erste Elektrode (11) auf dem Stapeltisch (110) gestapelt ist; und
Drehen des Stapeltisches (110) zur anderen Seite, damit der Stapeltisch (110) der zweiten Elektrode (12) zugewandt ist, wenn die zweite Elektrode (12) gestapelt wird, und
wobei das Drehen des Stapeltisches (110) zu einer Seite, damit der Stapeltisch (110) der ersten Elektrode (11) zugewandt ist, und das Drehen des Stapeltisches (110) zur anderen Seite, damit der Stapeltisch (110) der zweiten Elektrode (12) zugewandt ist, wenn die zweite Elektrode (12) gestapelt wird, abwechselnd durchgeführt werden.

3. Verfahren nach Anspruch 2, wobei das Zuführen der ersten Elektrode (11) zu dem Stapeltisch (110), das Zuführen der zweiten Elektrode (12) zu dem Stapeltisch (110) und das Zuführen des Separators (14) zu dem Stapeltisch (110) jeweils das Zuführen der ersten Elektrode (11), der zweiten Elektrode (12) und des Separators (14) zu dem Stapeltisch (110) umfasst, während die erste Elektrode (11), die zweite Elektrode (12) und der Separator (14) erwärmt werden.

4. Verfahren nach Anspruch 1, wobei das Erwärmen und Pressen nur des ersten oder zweiten Bereichs des Stapels (S) umfasst:
Erwärmen des Stapels (S) durch Erwärmen eines Stapeltischkörpers (111); und
Oberflächenpressen nur des ersten oder zweiten Bereichs des Stapels (S) durch Bewegen eines Paars von Pressblöcken (181, 182) in einer Richtung, in der das Paar von Pressblöcken (181, 182) einander zugewandt ist.

5. Verfahren nach Anspruch 1, wobei das Erwärmen und Pressen nur des ersten oder zweiten Bereichs des Stapels (S) für 5 Sekunden bis 60 Sekunden bei einer Temperatur von 30°C bis 100°C und einem Druck von 1 MPa bis 5 MPa durchgeführt wird.

6. Vorrichtung (100, 200) zum Herstellen einer Elektrodenanordnung (10), welche die Elektrodenanordnung (10) durch Stapeln einer ersten Elektrode (11), eines Separators (14) und einer zweiten Elektrode (12) herstellt, wobei die Vorrichtung umfasst:
einen Stapeltisch (110), auf dem die erste Elektrode (11), der Separator (14) und die zweite Elektrode (12) in Form eines Stapels (S) gestapelt werden, in dem die erste und die zweite Elektrode (11, 12) abwechselnd zwischen einem gefalteten Separator (14) angeordnet sind;
einen ersten Greifer (171), der so konfiguriert ist, dass er einen ersten Bereich des Stapels (S) greift und den Stapel (S) an dem Stapeltisch (110) fixiert;
einen zweiten Greifer (172), der so konfiguriert ist, dass er einen zweiten Bereich des Stapels (S) greift und den Stapel (S) an dem Stapeltisch (110) fixiert; und
ein Pressteil (180), das zwischen dem ersten Greifer (171) und dem zweiten Greifer (172) positioniert und dazu konfiguriert ist, um die erste Elektrode (11), den Separator (14) und die zweite Elektrode (12) durch Erwärmen und Pressen nur des ersten oder zweiten Bereichs des Stapels (S) zu verbinden,
wobei der erste und der zweite Bereich einander teilweise überlappen oder voneinander verschieden sind.

7. Vorrichtung nach Anspruch 6, wobei der Stapeltisch (110) eine Heizung (112) umfasst, die so konfiguriert ist, dass sie den Stapel (S) durch Erwärmen eines Stapeltischkörpers (111) erwärmt, und
wobei das Pressteil (180) ein Paar von Pressblöcken (181, 182) umfasst, die so konfiguriert sind, dass sie den Stapel (S) oberflächenpressen.

8. Vorrichtung nach Anspruch 6, die ferner umfasst:
ein erstes Elektrodenzuführungsteil (130), das so konfiguriert ist, dass es die erste Elektrode (11) zuführt;
ein zweites Elektrodenzuführungsteil (140), das so konfiguriert ist, dass es die zweite Elektrode (12) zuführt;
ein erstes Elektrodenstapelteil (150), das so konfiguriert ist, dass es die erste Elektrode (11), die von dem ersten Elektrodenzuführungsteil (130) zugeführt wird, auf dem Stapeltisch (110) stapelt; und
ein zweites Elektrodenstapelteil (160), das so konfiguriert ist, dass es die zweite Elektrode (12), die von dem zweiten Elektrodenzuführungsteil (140) zugeführt wird, auf dem Stapeltisch (110) stapelt.

9. Vorrichtung nach Anspruch 8, wobei das erste Elektrodenzuführungsteil (130) einen ersten Elektrodensitztisch (131) umfasst, auf dem die erste Elektrode (11) sitzt, bevor die erste Elektrode (11) auf dem Stapeltisch (110) durch das erste Elektrodenstapelteil (150) gestapelt wird, und
wobei das zweite Elektrodenzuführungsteil (140) einen zweiten Elektrodensitztisch (141) umfasst, auf dem die zweite Elektrode (12) sitzt, bevor die zweite Elektrode (12) durch das zweite Elektrodenstapelteil (160) auf dem Stapeltisch (110) gestapelt wird.

10. Vorrichtung nach Anspruch 9, wobei das erste Elektrodenstapelteil (150) einen ersten Saugkopf (151) umfasst, der so konfiguriert ist, dass er die erste Elektrode (11), die auf dem ersten Elektrodensitztisch (131) sitzt, durch Vakuum ansaugt, und
wobei das zweite Elektrodenstapelteil (160) einen zweiten Saugkopf (161) umfasst, der so konfiguriert ist, dass er die zweite Elektrode (12), die auf dem zweiten Elektrodensitztisch (141) sitzt, durch Vakuum ansaugt.

11. Vorrichtung nach Anspruch 10, ferner umfassend:
ein Drehteil (R), das zum Drehen des Stapeltisches (110) konfiguriert ist,
wobei das erste Elektrodenstapelteil (150) an einer Seite des Drehteils (R) vorgesehen ist und das zweite Elektrodenstapelteil (160) an der anderen Seite des Drehteils (R) vorgesehen ist, so dass der Separator (14) zickzackförmig gefaltet wird, um zwischen der ersten Elektrode (11) und der zweiten Elektrode (12) angeordnet zu werden,
wobei das Drehteil (R) abwechselnd einen Vorgang des Drehens des Stapeltisches (110) zu einer Seite hin, um dem Stapeltisch (110) zu ermöglichen, dem ersten Saugkopf (151) des ersten Elektrodenstapelteils (150) zum Zeitpunkt des Stapelns der ersten Elektrode (11) zugewandt zu sein, und einen Vorgang des Drehens des Stapeltisches (110) zu der anderen Seite hin, um dem Stapeltisch (110) zu ermöglichen, dem zweiten Saugkopf (161) des zweiten Elektrodenstapelteils (160) zum Zeitpunkt des Stapelns der zweiten Elektrode (12) zugewandt zu sein, durchführt.

## Revendications

1. Procédé de fabrication d'un ensemble d'électrodes (10), le procédé comprenant :
la fabrication d'un empilement (S) en empilant des premières électrodes (11), des séparateurs (14) et des secondes électrodes (12) sur une table d'empilement (110) de façon à ce que les premières électrodes (11) et les secondes électrodes (12) soient disposées alternativement entre les séparateurs (14) pliés ;
la fixation de l'empilement (S) sur la table d'empilement (110) en saisissant une première zone de l'empilement (S) au moyen d'un premier préhenseur (171) ;
le chauffage et le pressage uniquement d'une seconde zone de l'empilement (S) fixée par le premier préhenseur (171) ;
la libération de la première zone de l'empilement (S) en relâchant le premier préhenseur (171) après que le chauffage et le pressage de la seconde zone de l'empilement (S) sont terminés ;
la fixation de l'empilement (S) à la table d'empilement (110) en saisissant la seconde zone de l'empilement (S) au moyen d'un second préhenseur (172) ; et
le chauffage et le pressage uniquement de la première zone de l'empilement (S) fixée par le second préhenseur (172),
dans lequel les première et seconde zones se chevauchent partiellement ou sont différentes l'une de l'autre.

2. Procédé selon la revendication 1, comprenant en outre :
la fourniture de la première électrode (11) à la table d'empilement (110) ;
la fourniture de la seconde électrode (12) à la table d'empilement (110) ; et
la fourniture du séparateur (14) à la table d'empilement (110), dans lequel la fabrication de l'empilement (S) en empilant les premières électrodes (11), les séparateurs (14) et les secondes électrodes (12) sur la table d'empilement (110) de façon à ce que les premières et secondes électrodes (12) soient disposées alternativement entre les séparateurs (14) pliés comprend :
la fourniture de manière continue du séparateur (14), qui est fourni à la table d'empilement (110), à la table d'empilement (110) ;
la rotation de la table d'empilement (110) vers un côté pour permettre à la table d'empilement (110) de faire face à la première électrode (11) lorsque la première électrode (11) est empilée sur la table d'empilement (110) ; et
la rotation de la table d'empilement (110) vers l'autre côté pour permettre à la table d'empilement (110) de faire face à la seconde électrode (12) lorsque la seconde électrode (12) est empilée, et
dans lequel la rotation de la table d'empilement (110) vers un côté pour permettre à la table d'empilement (110) de faire face à la première électrode (11) et la rotation de la table d'empilement (110) vers l'autre côté pour permettre à la table d'empilement (110) de faire face à la seconde électrode (12) lorsque la seconde électrode (12) est empilée sont effectuées alternativement.

3. Procédé selon la revendication 2, dans lequel la fourniture de la première électrode (11) à la table d'empilement (110), la fourniture de la seconde électrode (12) à la table d'empilement (110) et la fourniture du séparateur (14) à la table d'empilement (110) comportent respectivement la fourniture de la première électrode (11), de la seconde électrode (12) et du séparateur (14) à la table d'empilement (110) tout en chauffant la première électrode (11), la seconde électrode (12) et le séparateur (14).

4. Procédé selon la revendication 1, dans lequel le chauffage et le pressage uniquement de la première ou la seconde zone de l'empilement (S) comprend :
le chauffage de l'empilement (S) en chauffant un corps de table d'empilement (111) ; et
le pressage en surface uniquement de la première ou la seconde zone de l'empilement (S) en déplaçant une paire de blocs de pressage (181, 182) dans une direction dans laquelle la paire de blocs de pressage (181, 182) se font face.

5. Procédé selon la revendication 1, dans lequel le chauffage et le pressage uniquement de la première ou la seconde zone de l'empilement (S) sont effectués pendant 5 secondes à 60 secondes à une température de 30 °C à 100 °C et une pression de 1 MPa à 5 MPa.

6. Appareil (100, 200) pour fabriquer un ensemble d'électrodes (10), qui fabrique l'ensemble d'électrodes (10) en empilant une première électrode (11), un séparateur (14) et une seconde électrode (12), l'appareil comprenant :
une table d'empilement (110) sur laquelle la première électrode (11), le séparateur (14) et la seconde électrode (12) sont empilés sous la forme d'un empilement (S) dans lequel les première et seconde électrodes (11, 12) sont disposées alternativement entre des séparateurs (14) pliés ;
un premier préhenseur (171) configuré pour saisir une première zone de l'empilement (S) et fixer l'empilement (S) à la table d'empilement (110) ;
un second préhenseur (172) configuré pour saisir une seconde zone de l'empilement (S) et fixer l'empilement (S) à la table d'empilement (110) ; **caractérisé par**
une partie de pressage (180) positionnée entre le premier préhenseur (171) et le second préhenseur (172) et configurée pour coller la première électrode (11), le séparateur (14) et la seconde électrode (12) en chauffant et en pressant uniquement la première ou la seconde zone de l'empilement (S),
dans lequel les première et seconde zones se chevauchent partiellement ou sont différentes l'une de l'autre.

7. Appareil selon la revendication 6, dans lequel la table d'empilement (110) comprend un réchauffeur (112) configuré pour chauffer l'empilement (S) en chauffant un corps de table d'empilement (111), et
dans lequel la partie de pressage (180) comprend une paire de blocs de pressage (181, 182) configurés pour presser en surface l'empilement (S).

8. Appareil selon la revendication 6, comprenant en outre :
une première partie de fourniture d'électrode (130) configurée pour fournir la première électrode (11) ;
une seconde partie de fourniture d'électrode (140) configurée pour fournir la seconde électrode (12) ;
une première partie d'empilement d'électrodes (150) configurée pour empiler la première électrode (11), qui est fournie à partir de la première partie de fourniture d'électrode (130), sur la table d'empilement (110) ; et
une seconde partie d'empilement d'électrodes (160) configurée pour empiler la seconde électrode (12), qui est fournie à partir de la seconde partie de fourniture d'électrode (140), sur la table d'empilement (110).

9. Appareil selon la revendication 8, dans lequel la première partie de fourniture d'électrode (130) comprend une première table de positionnement d'électrodes (131) sur laquelle la première électrode (11) est positionnée avant que la première électrode (11) soit empilée sur la table d'empilement (110) par la première partie d'empilement d'électrodes (150), et
dans lequel la seconde partie de fourniture d'électrode (140) comprend une seconde table de positionnement d'électrodes (141) sur laquelle la seconde électrode (12) est positionnée avant que la seconde électrode (12) soit empilée sur la table d'empilement (110) par la seconde partie d'empilement d'électrodes (160).

10. Appareil selon la revendication 9, dans lequel la première partie d'empilement d'électrodes (150) comprend une première tête d'aspiration (151) configurée pour aspirer par le vide la première électrode (11) positionnée sur la première table de positionnement d'électrodes (131), et
dans lequel la seconde partie d'empilement d'électrodes (160) comprend une seconde tête d'aspiration (161) configurée pour aspirer par le vide la seconde électrode (12) positionnée sur la seconde table de positionnement d'électrodes (141).

11. Appareil selon la revendication 10, comprenant en outre :
une partie de rotation (R) configurée pour faire tourner la table d'empilement (110),
dans lequel la première partie d'empilement d'électrodes (150) est prévue d'un côté de la partie de rotation (R), et la seconde partie d'empilement d'électrodes (160) est prévue de l'autre côté de la partie de rotation (R), de sorte que le séparateur (14) soit plié en zigzag de manière à être positionné entre la première électrode (11) et la seconde électrode (12),
dans lequel la partie de rotation (R) effectue alternativement une opération de rotation de la table d'empilement (110) vers un côté pour permettre à la table d'empilement (110) de faire face à la première tête d'aspiration (151) de la première partie d'empilement d'électrodes (150) au moment de l'empilement de la première électrode (11) et une opération de rotation de la table d'empilement (110) vers l'autre côté pour permettre à la table d'empilement (110) de faire face à la seconde tête d'aspiration (161) de la seconde partie d'empilement d'électrodes (160) au moment de l'empilement de la seconde électrode (12).
